# FASCICULE DE BREVET EUROPEEN

(11) **EP 2 058 543 B1**
(45) Date de publication et mention de la délivrance du brevet: **09.02.2011**
(21) Numéro de dépôt: 08019338.6
(22) Date de dépôt: 05.11.2008
(51) Int. Cl.: F16D 51/20, F16D 65/14

(54) **Frein à tambour**
Trommelbremse
Drum brake

(30) Priorité: 06.11.2007 FR 0707811
(43) Date de publication de la demande: 13.05.2009
(73) Titulaire: Robert Bosch GmbH, 70442 Stuttgart (DE)
(72) Inventeur: Cornic, Matthieu, 75009 Paris (FR); Perez, Miguel, 95100 Argenteuil (FR); Dupas, Christophe, 91120 Palaiseau (FR)
(74) Mandataire: Hurwic, Aleksander Wiktor

(56) Documents cités:
- DE-A1- 2 949 506
- FR-A- 2 841 619
- GB-A- 603 932
- US-A- 2 924 116
- US-A- 3 517 779

## Description

La présente invention concerne un frein à tambour, en particulier pour véhicule automobile.

Un frein à tambour comporte en général un plateau fixe qui est perpendiculaire à l'axe d'un tambour lié en rotation à une roue, et qui supporte des segments munis de garnitures de frottement en arc de cercle. Une commande principale à vérin permet de pousser ces segments radialement vers l'extérieur et d'appliquer les garnitures sur la face cylindrique intérieure du tambour solidaire en rotation de la roue pour la freiner.

Pour réaliser un frein de stationnement ou frein à main, on prévoit une commande additionnelle comportant un câble tiré par un levier actionné par le conducteur. Le câble coulisse dans une gaine dont l'extrémité prend appui sur le plateau, l'extrémité du câble agit sur un levier qui bascule et multiplie l'effort pour écarter les segments et appliquer une pression des garnitures sur le tambour.

Un frein à tambour de ce type décrit dans le document FR-A1- 2841619 comprend un dispositif d'accrochage rapide et sûr en aveugle de l'extrémité d'un câble sur un levier d'un frein comportant un tambour préalablement monté.

L'extrémité du câble porte un embout introduit par l'extérieur dans un orifice du plateau et qui coulisse sur une goulotte formée à une extrémité du levier tout en pressant une lame de ressort qui fléchit. Quand la partie arrière de l'embout atteint l'extrémité de la goulotte, la lame de ressort repousse l'embout pour engager le câble dans la goulotte. L'embout est verrouillé en position par la lame de ressort et permet d'exercer une traction sur le levier.

Pour le démontage du câble lors d'une opération de maintenance par déplacement en sens inverse de celui du montage. Ce démontage est délicat à réaliser, parce que le levier est situé derrière un des segments et le mouvement à réaliser est assez complexe, l'opérateur ne voyant pas l'embout et n'y ayant pas directement accès.

La présente invention a notamment pour but de pallier ces inconvénients et d'apporter une solution simple, efficace et économique au démontage du câble de frein à main.

Elle propose à cet effet un frein à tambour d'après la revendication 1.

Un avantage essentiel du frein à tambour selon l'invention est la facilité du démontage du câble de frein, grâce à l'échancrure de l'âme du segment qui permet de voir l'embout d'accrochage du câble et d'y accéder.

Cette échancrure a une profondeur qui s'étend sur environ la moitié de la largeur de l'âme rigide du segment, et une longueur au moins égale à sa profondeur.

Elle a des flancs inclinés de manière à ce que son entrée soit beaucoup plus large que son fond.

Elle est voisine de l'extrémité du segment qui est propre à pivoter en appui sur une butée liée au plateau du frein à tambour.

Un flanc incliné de l'échancrure peut rejoindre cette extrémité du segment.

Avantageusement, dans ce frein, une extrémité d'un levier est liée par une liaison pivotante à l'extrémité du segment sur laquelle agit une commande principale, et le câble de frein est fixé à l'autre extrémité du levier.

Le câble de frein coulisse dans une gaine dont l'extrémité prend appui sur le plateau du frein et l'embout du câble peut être accroché en aveugle sur le levier lorsque le tambour est assemblé.

Avantageusement, pour cela l'extrémité du levier fixée au câble se termine par une languette coudée formant une goulotte d'axe parallèle au plateau, le bord de la languette étant incliné et s'éloignant de l'axe de la goulotte dans la direction du tambour, le levier comportant également une virole de guidage de l'embout au montage du câble. Pendant le montage, l'embout glisse le long du bord incliné de la goulotte en poussant une lame élastique. Quand la face arrière de l'embout arrive à l'extrémité du bord incliné de la goulotte, la lame élastique pousse l'embout pour engager et maintenir une partie du câble dans la goulotte.

L'invention sera mieux comprise et d'autres caractéristiques et avantages de celle-ci apparaîtront plus clairement à la lecture de la description ci-après faite à titre d'exemple en référence aux dessins annexés dans lesquels :
- la figure 1 est une vue de face d'un frein à tambour, le tambour étant déposé ;
- les figures 2a, 2b et 2c sont des vues détaillées illustrant l'accrochage d'un câble de frein sur un levier du frein à tambour ;
- la figure 3 est une vue en perspective d'un segment suivant l'invention ;
- la figure 4 est une vue partielle du segment et du dispositif d'accrochage du câble.

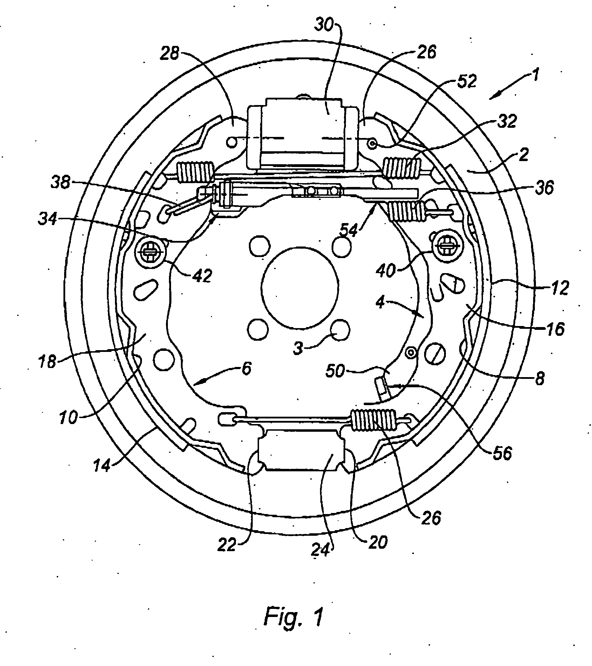

La figure 1 représente un dispositif de frein à tambour 1 qui, de façon connue, comporte un plateau de support 2 en forme de disque fixé au châssis d'un véhicule par des vis passant dans des perçages 3 disposés autour d'une ouverture centrale laissant passer le moyeu d'une roue qui entraîne en rotation un tambour de frein non représenté.

Le plateau 2 supporte deux segments 4, 6 comportant chacun une partie 8, 10 à surface cylindrique coaxiale au tambour et recevant par collage une garniture de frottement 12, 14. Chaque segment comporte une âme rigide 16, 18 formée d'une tôle s'étendant dans un plan perpendiculaire à l'axe du tambour et reliée à la partie cylindrique 8, 10.

Chaque segment 4, 6 peut pivoter autour d'une extrémité inférieure 20, 22 en appui sur une butée 24 liée au plateau 2, sous l'effet d'une commande hydraulique principale comportant un cylindre horizontal 30 fixé au plateau 2 et recevant deux pistons placés axialement de part et d'autre d'une chambre étanche recevant de l'huile sous pression par un conduit d'alimentation. Les pistons appuient chacun sur l'extrémité supérieure 26, 28 d'un segment pour générer de manière symétrique une force d'expansion vers l'extérieur pressant les garnitures de frottement 12, 14 sur une surface cylindrique intérieure du tambour lié à la roue afin de freiner sa rotation.

Un ressort de rappel 32 accroché par ses extrémités aux segments 4, 6 exerce une traction pour repousser les pistons à l'intérieur du cylindre 30 en chassant l'huile hors de la chambre afin de décoller les garnitures 12, 14 du tambour après un freinage. Les segments 4, 6 viennent au repos sur des butées formées sur une barre 34 liée aux segments par des ressorts 36, 38, cette barre 34 comportant un dispositif de mise à longueur qui l'allonge progressivement pour compenser l'usure des garnitures de frottement 12, 14 et garder ainsi une course utile des segments sensiblement constante.

Les segments sont maintenus axialement sur le plateau 2 par des ressorts courts 40, 42 exerçant une légère traction entre le plateau 2 et leur âme 16, 18.

Un levier 50 utilisé pour une commande auxiliaire de freinage s'étend dans un plan transversal entre le segment 4 et le plateau 2 et pivote autour d'un rivet 52 qui lie son extrémité supérieure à celle du segment 4. Son extrémité inférieure est liée par un dispositif d'accrochage 56 à un câble non représenté coulissant dans une gaine dont l'extrémité prend appui sur le plateau 4, pour exercer une traction éloignant le levier du tambour.

En un point 54 situé près du rivet 52, le levier 50 prend appui sur la barre 34. Une traction sur le câble relié au levier 50 provoque son basculement autour du point d'appui 54, l'extrémité supérieure du levier s'éloignant du cylindre de commande 30 en entraînant par le rivet 52 l'extrémité supérieure du segment 4 avec un effort de démultiplication dépendant des longueurs des bras de levier. Par réaction sur la barre 34, l'autre segment 6 est poussé vers le tambour et les deux segments exercent ainsi un effort de freinage de la roue.

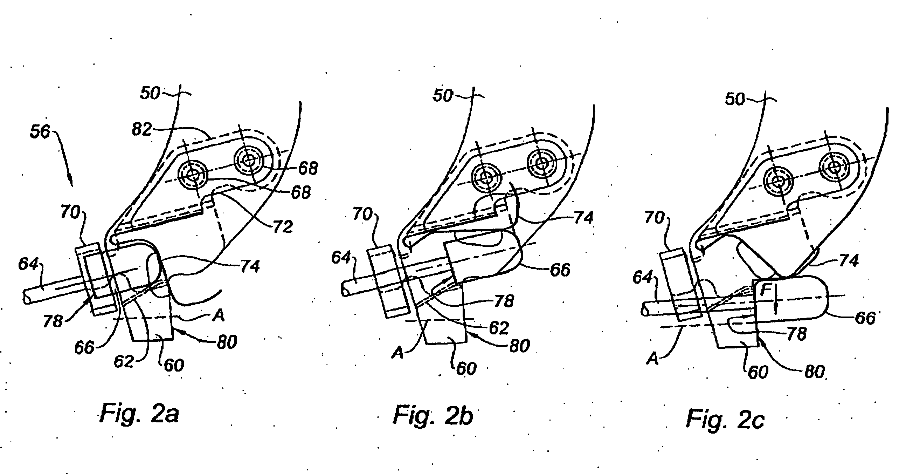

Les figures 2a à 2c représentent en détail le dispositif 56 d'accrochage du câble ainsi que le procédé d'accrochage. La partie inférieure du levier 50 formée par une tôle se termine par une languette courbée en arrière du plan du levier, formant une goulotte 60 d'axe A sensiblement horizontal et parallèle au plateau. Le bord 62 de la tôle à l'extrémité de la languette est incliné et s'éloigne de l'axe A de la goulotte dans la direction du tambour.

Le câble de frein 64 comporte pour l'accrochage sur le levier 50 un embout 66 cylindrique, d'un diamètre supérieur à celui du câble et ayant une partie avant bombée. L'autre extrémité du câble 64 est reliée à un système de commande propre à exercer une traction, comme un levier de frein à main ou un moteur électrique.

Une virole 70 est formée dans une tôle 82 fixée par des rivets 68 au levier et a un axe sensiblement parallèle à celui de la goulotte, pour guider l'embout 66 lors de l'introduction du câble 64 au montage. L'embout 66 s'appuie ensuite sur une lame élastique 74 formée dans une tôle fixée au levier 50 par les rivets 68, et glisse le long du bord incliné 62. Quand la face arrière 78 de l'embout 66 arrive à l'extrémité du bord incliné 62, l'embout est repoussé vers le bas par la lame élastique 74 et une partie du câble 64 est logée et maintenue au fond de la goulotte 60. La face arrière 78 de l'embout est en appui sur l'extrémité axiale 80 de la goulotte 60 et le câble 64 est prêt pour un actionnement.

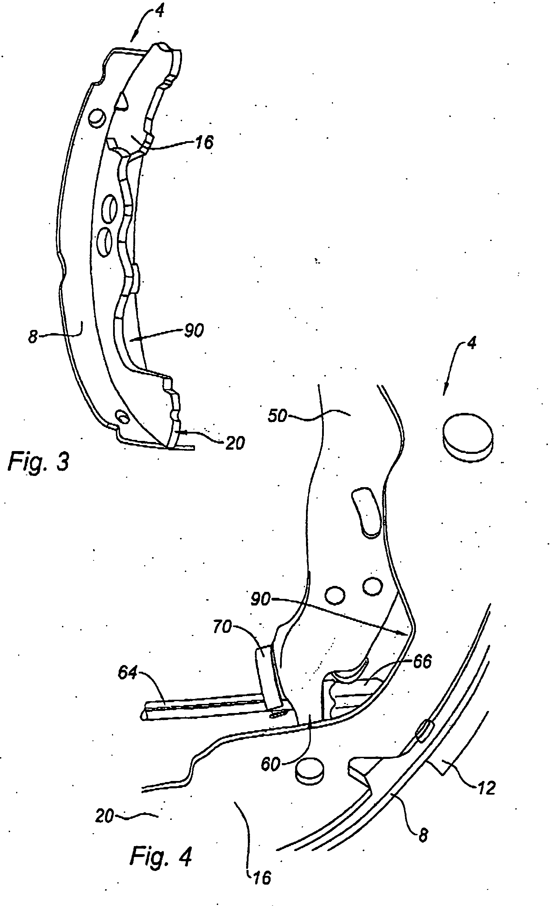

Les figures 3 et 4 représentent un segment 4 réalisé suivant l'invention, comportant une partie cylindrique 8 et une âme 16 dont le bord tourné vers l'axe du tambour comprend une échancrure 90 au voisinage de sa partie inférieure. Cette échancrure 90 s'étend radialement sur environ la moitié de la largeur de l'âme 16, et circonférentiellement suivant une distance un peu plus grande avec des côtés inclinés délimitant une entrée d'échancrure beaucoup plus large que son fond. Le bord incliné inférieur de l'échancrure 90 est à proximité de l'extrémité 20 du segment 4 qui appuie sur la butée 24 fixée au plateau 2.

Pour le démontage du câble 64 à des fins de maintenance, l'opérateur après la dépose du tambour du frein doit désolidariser le câble 64 du levier 50 en faisant suivre à l'embout 66 un cheminement inverse à celui qui a permis le montage. L'embout 66 doit notamment être remonté le long de l'extrémité axiale 80 de la goulotte 60 puis reculé, cette opération nécessitant le passage d'un outil pour exercer un effort sur l'embout.

Comme on le voit sur la figure 4, le démontage du câble est facilité par l'invention du fait que la majeure partie de l'embout 66 est accessible au travers du dégagement formé par l'échancrure 90. La visibilité de l'embout permet à un opérateur ne connaissant pas le système d'accrochage utilisé de voir l'accrochage de l'embout sur le levier et de comprendre comment procéder.

Lors du remontage du câble sur le levier, un opérateur qui n'a pas l'entraînement de ceux travaillant sur les lignes de montage automobile peut s'assurer plus facilement de la bonne mise en place de l'embout, ce qui représente un facteur de sécurité et limite les risques de retouches.

Par ailleurs, le freinage avec la commande principale exerce des efforts importants sur les segments qui doivent garder une bonne géométrie des faces de frottement afin de maintenir l'efficacité du freinage. Des mesures ont montré que l'échancrure 90 augmente un peu la souplesse du segment 4 et permet des contraintes plus homogènes dans l'âme 16 en répartissant mieux les efforts dans la matière.

Cette souplesse plus grande peut avoir un intérêt notamment pour diminuer des bruits de grincement ou de broutement émis lors du freinage dans certaines conditions.

## Revendications

1. Frein à tambour comportant un segment (4,6), ce segment (4) comportant une âme rigide (16) et une partie cylindrique (8) recevant une garniture de friction, et un levier étant équipé d'un embout (66) d'accrochage d'un câble de frein (64) fixé au levier (50) comprenant une goulotte (60) de réception du câble, formée avec un bord (62) incliné qui s'éloigne de l'axe de la goulotte (A) en direction du tambour ledit levier comportant également une virole (70) de guidage de l'embout (66) au montage du câble (64), et une lame élastique (74), propre à repousser l'embout (66) à la sortie de la virole pour loger et maintenir une partie du câble (64) au fond de la goulotte (60), **caractérisé en ce qu'**un bord intérieur de l'âme (16) du dit segment (4,6) comporte une échancrure (90) d'accès au dit embout (66) d'accrochage dudit câble.

2. Frein à tambour selon la revendication 1, **caractérisé en ce que** l'échancrure (90) a une profondeur qui s'étend sur environ la moitié de la largeur de l'âme rigide (16).

3. Frein à tambour selon la revendication 1 ou 2, **caractérisé en ce que** l'échancrure (90) a une longueur au moins égale à sa profondeur.

4. Frein à tambour selon l'une des revendications 1 à 3, **caractérisé en ce que** l'échancrure (90) a des flancs inclinés de sorte que l'entrée de l'échancrure (90) est plus large que son fond.

5. Frein à tambour selon l'une des revendications 1 à 4, **caractérisé en ce que** l'échancrure (90) est voisine d'une extrémité (20) du segment (4) qui est propre à pivoter en prenant appui sur une butée (24) portée par un plateau (2) du frein à tambour.

6. Frein à tambour selon l'ensemble des revendications 4 et 5, **caractérisé en ce qu'**un flanc de l'échancrure (90) rejoint l'extrémité précitée (20) du segment.

7. Frein à tambour selon la revendication 6, **caractérisé en ce qu'**une extrémité d'un levier (50) de commande secondaire est liée par une liaison pivotante (52) à l'extrémité du segment (4) sur laquelle agit une commande principale (30) à vérin, le câble de frein (64) étant fixé à l'autre extrémité du levier (50).

8. Frein à tambour selon la revendications 7, **caractérisé en ce que** le câble (64) de frein coulisse dans une gaine dont l'extrémité prend appui sur le plateau (2) du frein à tambour et l'embout (66) du câble (64) peut être fixé en aveugle sur le levier (50) lorsque le tambour est monté sur le plateau.

## Claims

1. Drum brake comprising a shoe (4,6), this shoe (4) comprising a rigid web (16) and a cylindrical part (8) that accepts a friction lining, and a lever comprising an attachment end terminal (66) of a brake cable (64) attached to the lever (50) comprising a cable-accommodating duct (60) formed with an inclined edge (62) which diverges from the axis of the duct (A) towards the drum, **characterized in that** an interior edge of the web (16) of the shoe (4,6) has a cut-out (90) providing access to said attachment end terminal (66) of a brake cable (64).

2. Drum brake shoe according to claim 1, **characterized in that** the cut-out (90) has a depth extending over approximately half the width of the rigid web (16).

3. Drum brake shoe according to claim 1 or 2, **characterized in that** the cut-out (90) has a length at least equal to its depth.

4. Drum brake shoe according to one of claims 1 to 3, **characterized in that** the cut-out (90) has inclined sides such that the open end of the cut-out (90) is wider than the closed end thereof.

5. Drum brake shoe according to one of claims 1 to 4, **characterized in that** the cut-out (90) is near one end (20) of the shoe (4) which is capable of pivoting by bearing against a stop (24) borne by a backplate (2) of the drum brake.

6. Drum brake shoe according to claims 4 and 5, considered together, **characterized in that** one side of the cut-out (90) meets the aforementioned end (20) of the shoe.

7. Drum brake according to claim 6, **characterized in that** one end of a secondary control lever (50) is connected by a pivoting connection (52) to that end of the shoe (4) on which a main cylinder-actuated control (30) acts, the brake cable (64) being attached to the other end of the lever (50).

8. Drum brake according to claim 7, **characterized in that** the brake cable (64) slides in a sheath the end of which bears against the backplate (2) of the drum brake and the cable (64) end terminal (66) can be attached to the lever (50) blind when the drum is mounted on the backplate.

## Patentansprüche

1. Trommelbremse mit einem Segment (4, 6), wobei dieses Segment (4) einen starren Steg (16) und einen zylindrischen Teil (8), der einen Reibbelag aufnimmt, aufweist, und einem Hebel, der mit einem Ansatz (66) zum Einhaken eines Bremskabels (64) ausgestattet ist, welches am Hebel (50) befestigt ist, der eine Rinne (60) zur Aufnahme des Kabels aufweist, welche mit einem abgeschrägten Rand (62) ausgebildet ist, der sich von der Achse (A) der Rinne in Richtung der Trommel entfernt, wobei der Hebel auch einen Ring (70) zur Führung des Ansatzes (66) beim Anbringen des Kabels (64) aufweist, sowie mit einer elastischen Zunge (74), die dazu geeignet ist, den Ansatz (64) beim Herausnehmen des Rings zurückzudrängen, um einen Teil des Kabels (64) am Boden der Rinne (60) aufzunehmen und festzuhalten, **dadurch gekennzeichnet, dass** ein Innenrand des Stegs (16) des Segments (4, 6) eine Aussparung (90) für einen Zugriff auf den Ansatz (66) zum Einhaken des Kabels aufweist.

2. Trommelbremse nach Anspruch 1, **dadurch gekennzeichnet, dass** die Aussparung (90) eine Tiefe aufweist, die sich auf etwa die Hälfte der Breite des starren Stegs (16) erstreckt.

3. Trommelbremse nach Anspruch 1 oder 2, **dadurch gekennzeichnet, dass** die Aussparung (90) eine Länge aufweist, die mindestens so groß ist wie ihre Tiefe.

4. Trommelbremse nach einem der Ansprüche 1 bis 3, **dadurch gekennzeichnet, dass** die Aussparung (90) Schrägflanken aufweist, so dass die Eingangsöffnung der Aussparung (90) größer ist als ihr Boden.

5. Trommelbremse nach einem der Ansprüche 1 bis 4, **dadurch gekennzeichnet, dass** die Aussparung (90) einem Ende (20) des Segments (4) benachbart ist, das schwenken kann, indem es sich an einem Anschlag (24) abstützt, der von einer Scheibe (2) der Trommelbremse getragen ist.

6. Trommelbremse nach der Gesamtheit der Ansprüche 4 und 5, **dadurch gekennzeichnet, dass** eine Flanke der Aussparung (90) mit dem vorgenannten Ende (20) des Segments zusammentrifft.

7. Trommelbremse nach Anspruch 6, **dadurch gekennzeichnet, dass** ein Ende eines Sekundär-Steuerhebels (50) über eine Schwenkverbindung (52) mit dem Ende des Segments (4) verbunden ist, auf welches ein Hauptstellantrieb (30) einwirkt, wobei das Bremskabel (64) am anderen Ende des Hebels (50) befestigt ist.

8. Trommelbremse nach Anspruch 7, **dadurch gekennzeichnet, dass** das Bremskabel (64) in einer Hülle gleitet, deren Ende sich an der Trommelbremsenscheibe (2) abstützt, und dass der Ansatz (66) des Kabels am Hebel (50) blind befestigt werden kann, wenn die Trommel auf der Scheibe angebracht ist.
